# EUROPÄISCHE PATENTSCHRIFT

(11) **EP 1 372 901 B1**
(45) Veröffentlichungstag und Bekanntmachung des Hinweises auf die Patenterteilung: **15.09.2004**
(21) Anmeldenummer: 02716824.4
(22) Anmeldetag: 06.03.2002
(51) Int. Cl.: B23K 26/02, B23K 26/32, B23K 26/24

(54) **VERFAHREN UND VORRICHTUNG ZUM VERBINDEN VON BESCHICHTETEN BLECHEN DURCH LASERSCHWEISSEN**
METHOD AND DEVICE FOR JOINING COATED METAL SHEETS BY MEANS OF LASER WELDING
PROCEDE ET DISPOSITIF POUR ASSEMBLER DES TOLES RECOUVERTES, PAR SOUDAGE LASER

(30) Priorität: 05.04.2001 DE 10116919
(43) Veröffentlichungstag der Anmeldung: 02.01.2004
(73) Patentinhaber: Nothelfer GmbH, D-88212 Ravensburg (DE)
(72) Erfinder: JÄCK, Kurt, 88326 Aulendorf (DE)
(74) Vertreter: Dahlkamp, Heinrich-Leo, Dipl.-Ing.
(86) Internationale Anmeldenummer: PCT/EP2002/002409
(87) Internationale Veröffentlichungsnummer: WO 2002/081140

(56) Entgegenhaltungen:
- EP-A- 0 438 612
- DE-A- 4 219 549
- DE-A- 4 403 999
- DE-A- 19 854 217
- DE-C- 3 812 448
- DE-C- 19 705 278
- DE-C- 19 932 415
- US-A- 4 745 257

## Beschreibung

Die Erfindung betrifft ein Verfahren zum Verbinden von beschichteten Blechen durch Laserschweißen gemäß Oberbegriff des Anspruches 1. Die Erfindung betrifft auch eine Vorrichtung gemäß Oberbegriff des Anspruchs 2 zur Durchführung des Verfahrens. Ein solches Verfahren und eine solche Vorrichtung werden in DE-A-4 219 549 offenbart.

Beschichtete Bleche werden beispielsweise für die Herstellung und Montage von Kfz-Karosserien eingesetzt. Das Beschichtungsmaterial kann aus Zink oder dergleichen bestehen und weist einen niedrigeren Schmelzpunkt auf als das Blechmaterial. Um zu verhindern, dass das Beschichtungsmaterial in das Schweißbad gelangt, ist es bekannt, einen von der Schweißnaht ausgehenden Entgasungsraum vorzusehen. Ein derartiger Vorschlag (DE 38 12 448 C1; DE 198 54 217 A1) geht dahin, beschichtete Bleche zu verwenden, die derart vorgeformt sind, dass sie im Verbindungsbereich entlang der Schweißnaht mit unterschiedlichen Krümmungsradien aufeinanderliegen und dadurch einen Entgasungsraum bilden. Nach einem anderen Vorschlag (DE 199 32 415 C1) sollen die Randstreifen vorgeformte Einprägungen aufweisen und lediglich im Bereich dieser Einprägungen aufeinanderliegend zusammengepresst werden. Das alles ist aufwendig, denn es erfordert eine vorausgehende Verformung der miteinander zu verbindenden beschichteten Bleche.

Aus der DE 197 05 278 C1 ist ein Verfahren und Vorrichtung zum Laserschweißen zweier sich zu einer Flanschnaht überlappender Bleche bekannt, wobei die Schweißung durch einen in der Ebene der Flanschnaht liegenden Laserstrahl unter Zuführung eines Schweißdrahtes bewirkt wird. Dabei werden die Bleche an einer dem Laserstrahl in Schweißrichtung vorausliegenden Position prozeßsimultan auseinandergespreizt und der Laserstrahl in den Bereich des Spaltgrundes der auseinandergespreizten Fläche eingestrahlt. Ein Entgasungsraum ist hierbei nicht vorgesehen.

Aufgabe der Erfindung ist es, auf einfache Weise eine Entgasung zu ermöglichen.

Diese Aufgabe wird mit einem Verfahren gemäß Anspruch 1 gelöst.

Gegenstand der Erfindung ist auch eine Vorrichtung gemäß Anspruch 2 zur Durchführung des Verfahrens mit einer Auflage für die beiden aufeinandergelegten Randstreifen und mit einem gegen die Auflage bzw. darauf zu bewegbaren Druckstück.

Die Vorrichtung ist dadurch gekennzeichnet, dass an oder neben dem Druckstück zumindest ein gegen den überstehenden Randstreifen bewegbarer Niederhalter angeordnet ist. Wird das Druckstück auf die auf der Auflage angeordneten Randstreifen der miteinander zu verbindenden Bleche abgesenkt und werden dadurch die Randstreifen eingespannt, dann wird gleichzeitig auch der überstehende Randstreifen vom anderen Randstreifen unter Bildung des Entgasungsraumes weggedrückt. Dazu ist der Niederhalter mit dem Druckstück verbunden und im Bereich des Überstandes des Randstreifens angeordnet. Es empfiehlt sich, den Niederhalter verstellbar am Druckstück anzuordnen, damit die Auslenkung des vorstehenden Randstreifens den jeweiligen betrieblichen Verhältnissen angepasst werden kann.

Das Druckstück und/oder die Auflage kann zumindest eine Öffnung für einen fokussierten Laserstrahl aufweisen, je nachdem, ob der Laserstrahl von oben oder von unten auf die Bleche gerichtet werden soll. Um ein Durchschweißen zu ermöglichen, kann die Auflage oder das Druckstück eine mit der Öffnung im anderen Bauteil korrespondierende Freisparung aufweisen. Im Übrigen können das Druckstück und/oder die Auflage auch gekühlt sein. Ferner kann eine in die Öffnung mündende Gaszuführung vorgesehen sein.

Bei einer anderen Ausführung ist das Druckstück eine auf den schmaleren Randstreifen einwirkende Rolle und ist eine auf den Überstand des vorstehenden Randstreifens einwirkende Niederhalterrolle vorgesehen. Wenn die Rollen unterschiedliche Durchmesser aufweisen, können sie gleichachsig angeordnet sein. Vorzugsweise können die Rollen an einer beweglichen Komponente (z.B. einem Roboter) mit einer Laserschweißeinrichtung angeordnet sein, wobei dann die bewegliche Komponente auch den notwendigen Anpreßdruck zwischen der Rolle und der Auflage erzeugen muss.

Im folgenden werden in der Zeichnung dargestellte Ausführungsbeispiele der Erfindung erläutert; es zeigen:
- Fig. 1: schematisch und teilweise die Ansicht einer erfindungsgemäßen Vorrichtung,
- Fig. 1a: eine Draufsicht der Auflage 5
- Fig. 2: eine Darstellung der Spanneinrichtung 8 und des Druckstückes 7 (entsprechend Fig. 1 von unten gesehen),
- Fig. 3: einen vergrößerten Ausschnitt zu Fig. 1,
- Fig. 4: einen nochmals vergrößerten Ausschnitt zu Fig. 3,
- Fig. 5: eine andere, ebenfalls vergrößerte Ausführung zum Gegenstand nach Fig. 1 und
- Fig. 6: eine Vergrößerung zu Fig. 5.

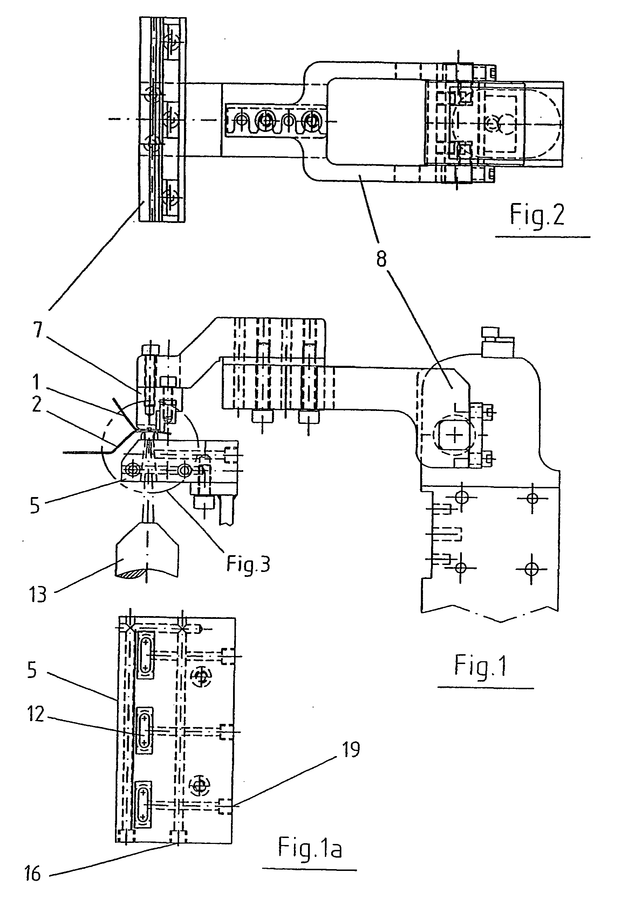

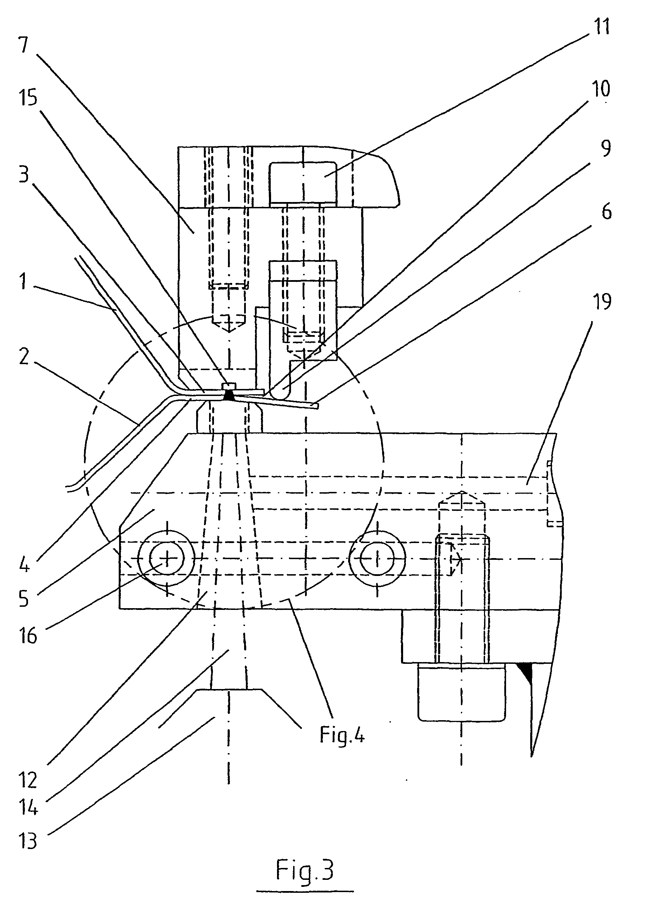

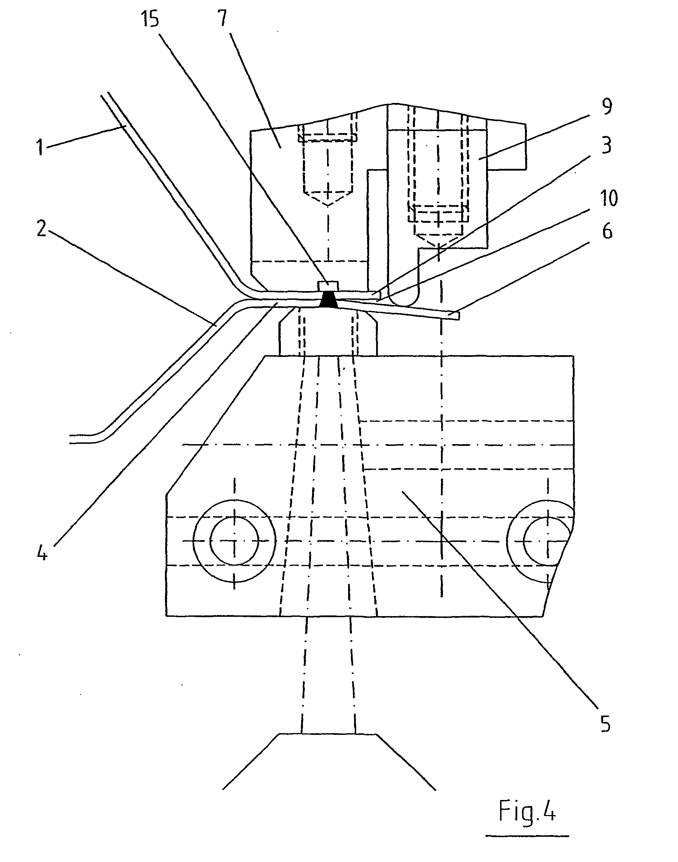

Die dargestellte Vorrichtung dient zum Verbinden von beschichteten Blechen 1, 2 durch Laserschweißen. Das Blech 1 weist einen schmaleren Randstreifen 3 und das Bleche 2 einen breiten Randstreifen 4 auf (vgl. Figuren 3 und 4). Die Randstreifen 3, 4 werden so auf eine Auflage 5 gelegt, dass der auf der Auflage 5 unmittelbar aufliegende Randstreifen 4 mit einem Überstand 6 über den schmaleren Randstreifen 3 vorsteht.

Ein Druckstück 7, welches mit einer nur angedeuteten Spanneinrichtung 8 gegen die Auflage 5 bewegbar ist, spannt die beiden Randstreifen 3, 4 in der dargestellten Position gegeneinander. Das Druckstück 7 weist an seiner Unterseite im Bereich des Überstandes 6 einen Niederhalter 9 auf, der den Überstand 6 und damit den breiteren Randstreifen 4 vom schmaleren Randstreifen 3 wegdrückt, sodass ein keilförmiger Entgasungsraum 10 entsteht. Der Niederhalter 9 ist mit Hilfe einer Stellschraube 11 einstellbar, sodass die Auslenkung des Überstandes 6 und damit des Randstreifens 4 den betrieblichen Verhältnissen angepasst werden kann.

Der Überstand kann eine Breite von 2 bis 4 mm aufweisen. Die Auslenkung des Überstandes 6 am freien Ende des Entgasungsraumes 10 kann 0,1 bis 0,2 mm betragen.

Die Auflage 5 weist in der Darstellung der Figuren 1, 3 und 4 zumindest eine durchgehende Öffnung 12 (bei der dargestellten Ausführung drei Öffnungen 12) auf, um den Durchtritt eines von einer nur angedeuteten Laserschweißeinrichtung 13 ausgehenden fokussierten Laserstrahls 14 von unten zu den Randstreifen 3, 4 zu ermöglichen. Die Laserschweißeinrichtung 13 ist an einer in den Figuren 1 bis 4 nicht dargestellten Komponente, z.B. einem Roboter, angeordnet. Beim Schweißen können die im Schweißbereich frei werdenden Dämpfe des Beschichtungsmaterials der Bleche 1, 2 durch den Entgasungsraum 10 entweichen.

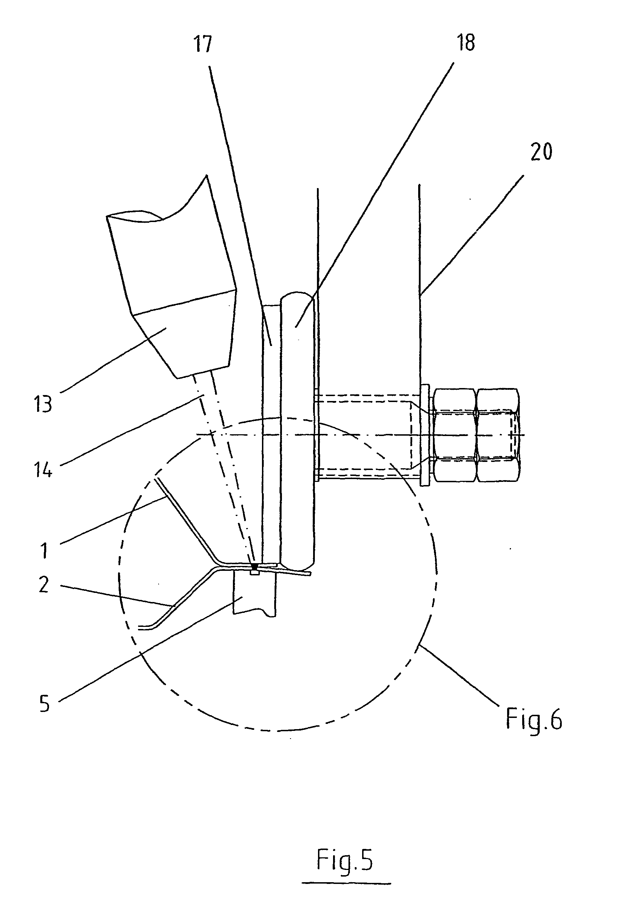

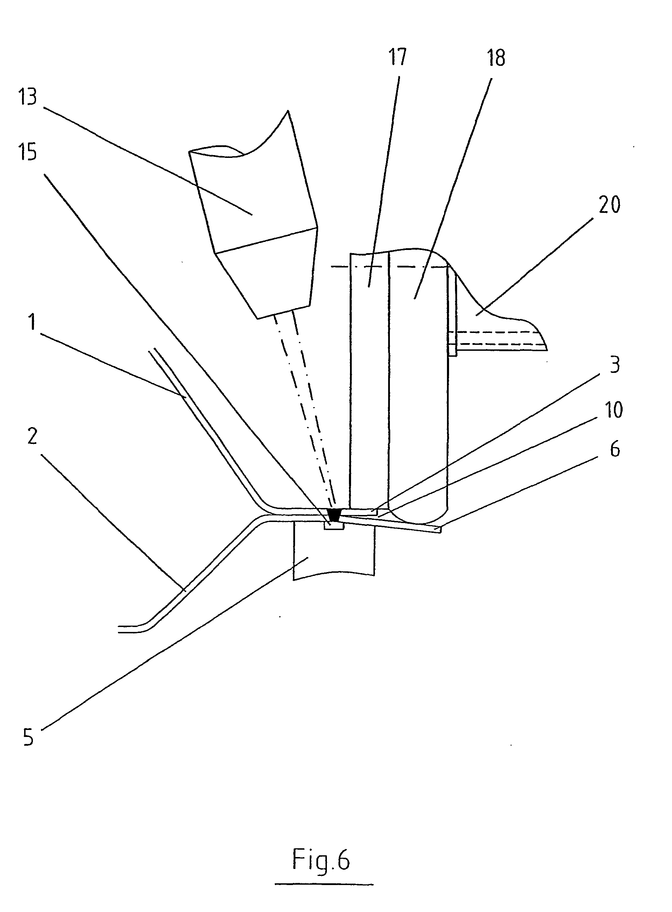

Um auch ein Durchschweißen zu ermöglichen, weist bei der dargestellten Ausführung nach den Figuren 1, 3 und 4 das Druckstück 7 und nach den Figuren 5 und 6 die Auflage 5 eine Freisparung 15 auf. Im Übrigen sind in der Auflage 5 Kühlkanäle 16 und Gaszuführungen 19 vorgesehen.

Bei der in den Figuren 5 und 6 dargestellten Ausführung bezeichnen gleiche Bezugszeichen gleiche Teile. Der Laserstrahl 14 ist hierbei von oben auf den Randstreifen 3 des Bleches 1 gerichtet. Als Druckstück ist eine Rolle 17 vorgesehen, die ebenso wie die Laserschweißeinrichtung 13 an einer nur andeutungsweise dargestellten beweglichen Komponente 20, z.B. einem Roboter, angeordnet ist. Die bewegliche Komponente 20 muss dann auch den notwendigen Anpreßdruck aufbringen. Neben der Rolle 17 ist eine Niederhalterrolle 18 angeordnet, die einen etwas größeren Durchmesser besitzt als die Rolle 17 und gleichachsig derart mit der Rolle 17 angeordnet ist, dass sie beim Schweißen den Überstand 6 des unteren Randstreifens 4 zur Bildung des Entgasungsraums 10 auslenkt.

### Bezugszeichenliste

- 1: Blech
- 2: Blech
- 3: Randstreifen an 1
- 4: Randstreifen an 2
- 5: Auflage
- 6: Überstand an 2, 4
- 7: Druckstück an 8
- 8: Spanneinrichtung
- 9: Niederhalter an 7
- 10: Entgasungsraum zwischen 3 und 4
- 11: Stellschraube an 7
- 12: Öffnung in 5
- 13: Laserschweißeinrichtung
- 14: Laserstrahl
- 15: Freisparung in 5 oder
- 16: Kühlkanäle in 5
- 17: Rolle
- 18: Niederhalterrolle
- 19: Gaszuführung in 5
- 20: bewegliche Komponente

## Patentansprüche

1. Verfahren zum Verbinden von beschichteten Blechen durch Laserschweißen, bei dem zwei Bleche (1, 2) derart aufeinandergelegt werden, dass der Randstreifen (4) des einen Blechs (2) über den Randstreifen (3) des anderen Blechs (1) vorsteht, und die Randstreifen (3, 4) zumindest im Bereich der herzustellenden Schweißnaht bereichsweise aufeinanderliegend zusammengepresst sowie mit einem quer oder im Wesentlichen quer zur Ebene der Randstreifen (3, 4) gerichteten Laserstrahl (14) durch Laserschweißen verbunden werden, **dadurch gekennzeichnet, dass** zur Bildung eines Entgasungsraums (10) beim Laserschweißen der Überstand (6) des Randstreifens (4) vom Randstreifen (3) des anderen Blechs unter elastischer Verformung des Überstandes (6) während des Schweißvorganges weggedrückt wird.

2. Vorrichtung zur Durchführung des Verfahrens nach Anspruch 1 mit einer Auflage (5) für die beiden im Bereich der herzustellenden Schweißnaht aufeinandergelegten Randstreifen (3, 4) mit einem quer oder im wesentlichen quer zur Ebene der Randstreifen gerichteten Laserstrahl und mit einem gegen die Auflage (5) bewegbaren Druckstück (7, 17), **dadurch gekennzeichnet, dass** an oder neben dem Druckstück (7, 17) im Bereich des Überstandes (6) des Randstreifens (4) des einen Blechs zumindest ein gegen den Überstand (6) des Randstreifens (4) bewegbarer Niederhalter (9, 18) angeordnet ist, der den Überstand (6) unter elastischer Verformung während des Schweißvorganges vom Randstreifen (3) des anderen Blechs wegdrückt.

3. Vorrichtung nach Anspruch 2, **dadurch gekennzeichnet, dass** der Niederhalter (9) fest mit dem Druckstück (7) verbunden ist.

4. Vorrichtung nach Anspruch 2, **dadurch gekennzeichnet, dass** der Niederhalter (9) verstellbar am Druckstück (7) angeordnet ist.

5. Vorrichtung nach einem der Ansprüche 2 bis 4, **dadurch gekennzeichnet, dass** das Druckstück (7) und/oder die Auflage (5) zumindest eine Öffnung (12) für einen fokussierten Laserstrahl (14) aufweist.

6. Vorrichtung nach einem der Ansprüche 2 bis 5, **dadurch gekennzeichnet, dass** die Auflage (5) oder das Druckstück (7) eine mit der Öffnung (12) im anderen Bauteil (7, 5) korrespondierende Freisparung (15) aufweist.

7. Vorrichtung nach einem der Ansprüche 2 bis 6, **dadurch gekennzeichnet, dass** das Druckstück (7) und/oder die Auflage (5) gekühlt sind.

8. Vorrichtung nach einem der Ansprüche 2 bis 7, **gekennzeichnet durch** eine in die Öffnung (12) mündende Gaszuführung (19).

9. Vorrichtung nach Anspruch 2, **dadurch gekennzeichnet, dass** das Druckstück (7) eine auf den schmaleren Randstreifen (3) einwirkende Rolle (17) ist, und dass eine auf den Überstand (6) des vorstehenden Randstreifens (4) einwirkende Niederhalterrolle (18) vorgesehen ist.

10. Vorrichtung nach Anspruch 9, **dadurch gekennzeichnet, dass** die Rollen (17, 18) unterschiedliche Durchmesser aufweisen und gleichachsig angeordnet sind.

11. Vorrichtung nach einem der Ansprüche 9 oder 10, **dadurch gekennzeichnet, dass** die Rollen (17, 18) an einer beweglichen Komponente (20) gemeinsam mit einer Laserschweißeinrichtung (13) angeordnet sind.

## Claims

1. A method for joining of coated metal sheets by laser welding, in which two metal sheets (**1,2**) are laid one on top of another in such a manner that the marginal strip (**4**) of the one metal sheet (**2**) protrudes over the marginal strip (**3**) of the other metal sheet (**1**), and in which said marginal strips (**3,4**) are pressed together, lying one on top of another, at least in some areas in the area of the weld seam to be prepared, and are joined by laser welding by means of a laser beam (**14**) directed at right angles or essentially at right angles to the plane of the marginal strips (**3,4**), **characterized in that** the protrusion (6) of the marginal strip (4) is pushed away from the marginal strip (**3**) of the other metal sheet, there being an elastic deformation of the protrusion (**6**) during the welding procedure.

2. A device for executing said method pursuant to Claim 1, comprised of a support (**5**) for the two marginal strips (**3,4**) lying one on top of another in the area of the weld seam to be prepared and with a laser beam (**14**) directed at right angles or essentially at right angles to the plane of the marginal strips (**3,4**), and with a pressing piece (**7,17**) movable in relation to the support (**5**), **characterized in that** at least one said holding-down device (9,18), which is movable in relation to the protrusion (6) of the marginal strip (4), is arranged at or next to said pressing piece (7,17) in the area of the protrusion (6) of the marginal strip (4) of the one metal sheet, said pressing piece (7,17) pushing the protrusion (6) away from the marginal strip (3) of the other metal sheet with elastic deformation during the welding procedure.

3. A device as claimed in Claim 2, **characterized in that** said holding-down device (**9**) is rigidly connected to the pressing piece (**7**).

4. A device as claimed in Claim 2, **characterized in that** said holding-down device (**9**) is adjustably arranged at the pressing piece (**7**).

5. A device as claimed in any of Claims 2 through 4, **characterized in that** the pressing piece (**7**) and/or the support (**5**) has at least one opening (**12**) for a focused laser beam (**14**).

6. A device as claimed in any of Claims 2 through 5, **characterized in that** the support (**5**) or the pressing piece (**7**) has a recess (**15**) corresponding with the opening (**12**) in the other component (**7,5**).

7. A device as claimed in any of Claims 2 through 6, **characterized in that** the pressing piece (**7**) and/or the support (**5**) is cooled.

8. A device as claimed in any of Claims 2 through 7, **characterized by** a gas feeder (**19**) opening into the opening (**12**).

9. A device as claimed in Claim 2, **characterized in that** the pressing piece (**7**) is a roller (**17**) acting on the narrower marginal strip (**3**), and that a holding-down roller (**18**) acting on the protrusion (**6**) of the protruding marginal strip (**4**) is provided for.

10. A device as claimed in Claim 9, **characterized in that** the rollers (**17,18**) have different diameters and are coaxially arranged.

11. A device as claimed in any of Claims 9 or 10, **characterized in that** the rollers (**17,18**) are arranged at a movable component (**20**) jointly with a laser welding equipment (13).

## Revendications

1. Procédé pour assembler des tôles revêtues par soudage laser selon lequel deux tôles (1, 2) sont posées l'une sur l'autre de manière telle que la bande marginale (4) de l'une des tôles (2) fait porte-à-faux au-dessus de la bande marginale (3) de l'autre tôle (1) et que les bandes marginales (3, 4) sont pressées l'une sur l'autre par zone au niveau du cordon de soudure à réaliser ainsi qu'assemblées par soudage laser par un rayon laser (14) orienté transversalement ou pour l'essentiel transversalement au plan des bandes marginales (3, 4), **caractérisé en ce que,** pour former une zone de dégazage (10) lors du soudage laser, le porte-à-faux (6) de la bande marginale (4) est repoussé de la bande marginale (3) de l'autre tôle par déformation élastique du porte-à-faux (6) pendant l'opération de soudage.

2. Dispositif pour réaliser le procédé selon la revendication 1 avec un support (5) pour les deux bandes marginales (3, 4) disposées l'une sur l'autre au niveau du cordon de soudure à réaliser avec un rayon laser (14) orienté transversalement ou pour l'essentiel transversalement au plan des bandes marginales et avec un élément de pression (7, 17) qui se déplace contre le support (5), **caractérisé en ce qu**'au moins un presse-tôle (9, 18) se déplaçant contre le porte-à-faux (6) de la bande marginale (4) est disposé sur ou près de l'élément de pression (7, 17) au niveau du porte-à-faux (6) de la bande marginale (4) d'une des tôles, ledit presse-tôle repoussant le porte-à-faux (6) de la bande marginale de l'autre tôle (3) par déformation élastique pendant le soudage.

3. Dispositif selon la revendication 2, **caractérisé en ce que** le presse-tôle (9) est relié de manière fixe à l'élément de pression (7).

4. Dispositif selon la revendication 2, **caractérisé en ce que** le presse-tôle (9) est disposé de manière réglable sur l'élément de pression (7).

5. Dispositif selon une des revendications 2 à 4, **caractérisé en ce que** l'élément de pression (7) et/ou le support (5) présentent au moins une ouverture (12) pour un rayon laser focalisé (14).

6. Dispositif selon une des revendications 2 à 5, **caractérisé en ce que** le support (5) ou l'élément de pression (7) présente un dégagement (15) correspondant à l'ouverture (12) dans l'autre pièce (7, 5).

7. Dispositif selon une des revendications 2 à 6, **caractérisé en ce que** l'élément de pression (7) et/ou le support (5) sont refroidis.

8. Dispositif selon une des revendications 2 à 7, **caractérisé par** une amenée de gaz (19) aboutissant dans l'ouverture (12).

9. Dispositif selon la revendication 2, **caractérisé en ce que** l'élément de pression (7) est un rouleau (17) agissant sur la bande marginale plus étroite (3) et qu'il est prévu un rouleau presse-tôle (18) agissant sur le porte-à-faux (6) de la bande marginale (4) en porte-à-faux (4).

10. Dispositif selon la revendication 9, **caractérisé en ce que** les rouleaux (17, 18) ont des diamètres différents et qu'ils sont ordonnés dans le même axe.

11. Dispositif selon une des revendications 9 ou 10, **caractérisé en ce que** les rouleaux (17, 18) sont ordonnés sur un composant mobile (20) en commun avec une installation de soudage laser (20).
